# EUROPÄISCHE PATENTSCHRIFT

(11) **EP 0 923 797 B1**
(45) Veröffentlichungstag und Bekanntmachung des Hinweises auf die Patenterteilung: **11.10.2000**
(21) Anmeldenummer: 97937343.8
(22) Anmeldetag: 28.08.1997
(51) Int. Cl.: H01S 3/042, H01S 3/098

(54) **KURZPULS-LASERVORRICHTUNG**
SHORT-PULSE LASER DEVICE
DISPOSITIF LASER A IMPULSIONS BREVES

(30) Priorität: 06.09.1996 AT 158296
(43) Veröffentlichungstag der Anmeldung: 23.06.1999
(73) Patentinhaber: Stingl, Andreas, 2100 Korneuburg (AT); Spielmann, Christian, 2100 Korneuburg (AT); Krausz, Ferenc, 2100 Korneuburg (AT)
(72) Erfinder: Stingl, Andreas, 2100 Korneuburg (AT); Spielmann, Christian, 2100 Korneuburg (AT); Krausz, Ferenc, 2100 Korneuburg (AT)
(74) Vertreter: Weinzinger, Arnulf, Dipl.-Ing.
(86) Internationale Anmeldenummer: AT9700190
(87) Internationale Veröffentlichungsnummer: WO9810494

(56) Entgegenhaltungen:
- DE-A- 4 425 636
- US-A- 4 951 294
- STINGL A ET AL: "GENERATION OF 11-FS PULSES FROM A TI:SAPPHIRE LASER WITHOUT THE USE OF PRISMS" OPTICS LETTERS, Bd. 19, Nr. 3, 1.Februar 1994, Seiten 204-206, XP000424365 in der Anmeldung erwähnt

## Beschreibung

Die Erfindung betrifft eine Kurzpuls-Laservorrichtung mit passiver Modenverkopplung, mit einem Laserresonator, dem ein Pumpstrahl zugeführt wird, mit einem Laserkristall, insbesondere einem Titan-Saphir-(Ti:S-)Laserkristall, und mit Laserspiegeln, wobei der Laserkristall, der zufolge der Strahlfokussierung einer Wärmebelastung ausgesetzt ist, an einem der Wärmeableitung dienenden Kühlkörper montiert ist, der eine Bohrung für den Durchgang des Laserstrahls aufweist.

Derartige Laservorrichtungen werden einerseits für wissenschaftliche Zwecke eingesetzt, andererseits können sie bei der Materialbearbeitung Anwendung finden, insbesondere wenn feine Strukturen herzustellen sind.

Im modenverkoppelten Zustand liefert ein Laser, anstatt ein kontinuierliches Laserlicht (cw-Betrieb - continuous work) abzugeben, Laserpulse, indem er Energie speichert und danach pulsartig abgibt. Die Periodendauer dieser Impulse entspricht im allgemeinen der Umlaufzeit der Pulse im Laserresonator, wobei beispielsweise bei einer Länge des linearen Resonators von 2 m Pulse mit einer Frequenz von ca. 75 MHz erzeugt werden; der Laserlichtpuls durchläuft dabei den Laserresonator in beiden Richtungen, was also im vorliegenden Beispiel einer Länge von 4 m entspricht. Zur Modenverkopplung wird periodisch (mit der Resonatorumlauffrequenz) - z.B. durch Ablenken oder Abblocken des Laserstrahls - ein Verlust eingeführt, so daß der Laser zu pulsen beginnt. Das führt zu einer Spitzenleistung der Pulse, die wesentlich größer ist (z.B. 100 kW bis 200 kW) als die Ausgangsleistung (z.B. 150 mW bis 300 mW) des Lasers im cw-Betrieb.

Grundsätzlich kann zwischen zwei Arten der Modenverkopplung unterschieden werden:

Bei der aktiven Modenverkopplung wird mit einem aktiven Element, einem Modulator, der von außen über einen Treiber mit Energie versorgt wird, ein periodischer Verlust eingeführt, z.B. dadurch, daß der Modulator den Laserstrahl periodisch aus seiner Ausbreitungsrichtung ablenkt. Damit wird der Laser gezwungen, seine Lasertätigkeit in den Zeitintervallen auszuüben, in denen ein geringer Verlust gegeben ist, wogegen der Laser in den Zeitintervallen, in denen hohe Verluste gegeben sind, Energie speichern kann.

Bei der passiven Modenverkopplung wird der Effekt einer optischen Nichtlinearität im Resonator ausgenutzt, d.h. es wird ein optisch nicht-lineares Element im Weg des Laserstrahls angeordnet, welches proportional zur Intensität des Laserstrahls seine optischen Eigenschaften, wie die Transmission oder Reflektivität, ändert. Beispielsweise kann als nicht-lineares Element der Laserkristall selbst verwendet werden, der einen sog. sättigbaren Absorber bildet, bei dem der Verlust immer kleiner wird, je höher die Intensität des auftreffenden Laserlichtes ist. Durch eine Fluktuation in der Laserleistung entsteht ein Puls, der einen wesentlich geringeren Verlust "sieht" als der Laser im cw-Betrieb (vgl. auch US-5 079 772 A). Der Laserkörper (Festkörperlaser) besteht aus einem nichtlinearen Material, dessen optische Dicke mit der Feldstärkeverteilung der Laserstrahlung variiert. Beispielsweise ist der nicht-lineare Brechungsindex eine Funktion des Quadrates der Feldstärke, d.h. der Laserstrahl, dessen Feldstärkeverteilung entsprechend einer Gauß-Kurve angenommen werden kann, "sieht" im Falle eines an sich planparallele Flächen aufweisenden Laserkristalls effektiv ein Element mit einer sich über den Querschnitt ändernden optischen Dicke. Auf diese Weise entsteht aus einer planparallelen Nichtlinearität eine Fokussierungslinse.

Dieser optische Kerr-Effekt kann auf zwei Arten zur Modenverkopplung (sog. "Kerr-lens mode-locking") genutzt werden: im Fall der sog. "weichen Blende" (siehe Spence et al., Optics Letters, 1. Jänner 1991, Vol.16, S. 42-44) wird der Pumpstrahl (bei Ti:S-Lasern wird die Energie mittels grünem Laser, wie z.B. Argonlaser, zugeführt) sehr stark in den Laserkristall fokussiert, so daß der Resonatorstrahl, der durch den Ti:S-Laser erzeugt wird (ca. 800 nm, infrarot), dann die meiste Pumpenergie aufnehmen kann, d.h. die höchste Verstärkung erfährt, wenn er den geringsten Durchmesser besitzt. Je höher somit die Intensität bzw. die Feldstärke des Pulses ist, desto stärker wird der Laserpuls fokussiert, und desto mehr wird er bei jedem Durchlaufen des Laserkristalls verstärkt, wodurch wiederum seine Intensität erhöht wird. Diese positive Rückkopplung führt zu einer stabilen Modenverkopplung.

Im Fall der sog. "harten Blende" (s. z.B. US-5 079 772 A) wird der Effekt ausgenutzt, daß eine Blende den Resonatorstrahl an einer Stelle einschneidet, wo er zu dem Zeitpunkt einen größeren Durchmesser aufweist, wenn die Intensität (Feldstärke) geringer ist, und zu dem Zeitpunkt einen kleineren Durchmesser aufweist, wenn die Intensität größer ist und der Resonatorstrahl somit im Laserkristall fokussiert wird.

Andere passive Modenverkopplungstechniken, wie z.B. Halbleiter-sättigbare Absorber, sind ebenfalls bekannt, s. z.B. R.Fluck et al., "Broadband saturable absorber for 10-fs pulse generation", Optics Letters, 15.Mai 1996, Vol.21, Nr.10, S. 743 - 745.

Um extrem kurze und somit hochintensive Pulse (im Femtosekundenbereich) zu erzeugen, ist es notwendig, die Gruppendispersion im Resonator zu kontrollieren. Da Pulse, die im Zeitbereich besonders kurz sind, im Frequenzbereich ein breites Spektrum besitzen, tritt der unangenehme Effekt auf, daß im Laserkristall die verschiedenen Frequenzkomponenten einen unterschiedlichen Brechungsindex und somit eine unterschiedliche optische Länge des Laserkristalls "sehen" und dadurch beim Durchlaufen des Laserkristalls unterschiedlich verzögert werden. Somit werden die Pulse wieder verlängert. Um dem entgegenzuwirken, kann an sich durch eine Anordnung von optischen Prismen der Strahl frequenzmäßig aufgefächert werden; die verschiedenen Frequenzkomponenten legen unterschiedlich lange Wege zurück, und in einem weiteren Prisma wird der Strahl wieder kollimiert (parallelgerichtet). Das hat zur Folge, daß die unterschiedlichen Frequenzkomponenten gerade umgekehrt verzögert werden wie im Laserkristall, wodurch die Dispension, die im Laserkristall eingeführt wird, wieder kompensiert wird (vgl. US 5 079 772 A).

Gemäß einem anderen Vorschlag (z.B. Stingl et al. "Generation of 11-fs pulses from a Ti:sapphire laser without the use of prisms", Optics Letters, 1. Februar 1994, Vol. 19, Nr.3, S. 204 - 206) kommen spezielle Laserspiegel zum Einsatz, die aus vielen (> 40) Schichten aufgebaut sind, wobei die verschiedenen Wellenlängenkomponenten unterschiedlich tief in den Spiegel eindringen, bevor sie reflektiert werden. Demgemäß werden die verschiedenen Wellenlängenkomponenten des Laserstrahls unterschiedlich lang im Spiegel verzögert; die kurzwelligen Anteile werden an der Oberfläche reflektiert, wogegen die langwelligen Anteile erst tiefer im Spiegel reflektiert werden und somit gegenüber den kurzwelligen Anteilen eine Verzögerung erfahren. Der Vorteil der letzteren Methode ist eine bessere Dispersionskompensation, wodurch extrem kurze Pulse direkt aus einem Resonator erzeugt werden können.

Unabhängig von der im einzelnen verwendeten Dispersionskompensationstechnik ist es für die Dispersionskontrolle, um extrem kurze Laserpulse (in der Größenordnung von 10 fs und darunter) zu erzeugen, auch wichtig, die Materialdispersion - vor allem im Laserkristall - niedrig zu halten, und hierfür ist es zweckmäßig, einen dünnen, d.h. kurzen Laserkristall (d.i. ein Laserkristall mit kurzer Weglänge) zu verwenden. Zum Ausgleich sollte der Laserkristall eine hohe Dotierung aufweisen (z.B. absorbiert er schon innerhalb von 2 mm über 70%). Um die Pumpschwelle möglichst niedrig zu halten und somit eine effiziente Umwandlung von Pumpleistung in Laser-Ausgangsleistung zu gewährleisten, sollten der Pumpstrahl und der Resonatorstrahl möglichst stark fokussiert werden. Die stark reduzierten Dimensionen des gepumpten Volumens des Laserkristalls führen dadurch zu einer erhöhten Wärmebelastung.

Es ist somit Ziel der Erfindung, eine Laservorrichtung der eingangs angeführten Art zu schaffen, bei der eine verbesserte Wärmeableitung für den Laserkristall vorgesehen wird, so daß eine erhöhte Wärmebelastung des Laserkristalls - bei vergleichsweise kleinen Abmessungen desselben - und in der Folge eine Erhöhung der Ausgangsleistung ermöglicht wird.

Die erfindungsgemäße Laservorrichtung der eingangs angeführten Art ist demgemäß dadurch gekennzeichnet, daß am Kühlkörper eine Kristallfassung aus gut wärmeleitendem Material vorgesehen und der Laserkristall in einer Öffnung dieser Kristallfassung, unter seitlicher Anlage an gegenüberliegenden Wänden der Öffnung der Kristallfassung, gehalten ist, wobei die Öffnung in der Kristallfassung mit der Bohrung im Kühlkörper fluchtet.

Im Gegensatz zu Dauerstrich-Festkörperlasern, in denen Kristalle mit einer Länge von 5 bis 10 cm zum Einsatz kommen, und zu herkömmlichen Femtosekunden-Festkörperlasern, die einen Kristall mit einer Länge von 10 bis 20 mm, mit einem Querschnitt von 4 x 4 mm oder größer, verwenden, können bei dieser Ausbildung Laserkristalle mit einer Länge von einigen wenigen mm und mit außerordentlich kleinem Querschnitt, in der Größenordnung von beispielsweise 1 mm, eingesetzt werden, wobei in der Folge auch extrem kurze Laserpulse (unter 10 fs) erzeugt werden können. Dies bringt nicht nur eine Reduktion der Kosten des Laserkristalls selbst mit sich, sondern ermöglicht in Verbindung mit der angegebenen Kristallfassung, die eine hohe Wärmeleitfähigkeit hat, eine wirksame Ableitung der Wärme aus dem Laserkristall. Dabei ist auch wesentlich, daß durch die kleinen Laserkristall-Abmessungen der Weg im Laserkristall für die Wärmeabfuhr vom im Mittenbereich befindlichen gepumpten Volumen des Laserkristalls (beispielsweise mit einem Durchmesser von ungefähr 10 bis 50 µm) zu den Flächen der Kristallfassung stark verkürzt wird. Die Kristallfassung selbst überträgt die Wärme zum Kühlkörper, dessen Temperatur beispielsweise auf 10°C gehalten wird. Diese Temperaturkontrolle am Kühlkörper ist technisch gut beherrschbar (wobei allerdings bei einem Abkühlen unter die genannte Temperatur Kondensationsprobleme auftreten können). Üblicherweise besteht der Kühlkörper aus Aluminium. Durch die Reduktion der Temperatur im Kristallinneren kann die Ausgangsleistung des Pulslasers verbessert werden. Dies hängt unter anderem damit zusammen, daß die Lebensdauer der Elektronen im oberen Laserniveau mit zunehmender Temperatur im Laserkristall abnimmt. Versuche unter Verwendung von Ti:S-Laserkristallen haben gezeigt, daß bei Einsatz der erfindungsgemäß vorgesehenen Kristallfassung gegenüber früheren Ausführungen mit Kühlkörper eine bis zu 20%ige Leistungssteigerung erzielt werden konnte. Aus der Natur der passiven Modenverkopplung folgt, daß aufgrund der erhöhten Ausgangsleistung - bei gleicher Pumpleistung - eine weitere Pulsverkürzung zu erreichen ist.

Um eine Justierung des Laserkristalls in der Kristallfassung möglichst einfach bewerkstelligen zu können, ist es von besonderem Vorteil, wenn die beispielsweise plättchenförmige Kristallfassung mit einer schlitzförmigen Öffnung ausgebildet ist. Bei dieser Ausführungsform kann der Laserkristall innerhalb der schlitzförmigen Öffnung an der gewünschten Stelle exakt positioniert werden. Um dabei auch ein Einschieben und Positionieren des Laserkristalls vom Rand der Kristallfassung her zu ermöglichen, ist es weiters günstig, wenn sich die schlitzförmige Öffnung von einem Rand der Kristallfassung her in diese erstreckt. Bei dieser Ausführung kann der Laserstrahl auch am oder nahe dem Rand der Kristallfassung angeordnet werden. Weiters hat es sich für ein Festklemmen des Laserkristalls in der Öffnung ohne besondere zusätzliche Mittel als besonders vorteilhaft erwiesen, wenn sich die schlitzförmige Öffnung bis knapp vor dem gegenüberliegenden Rand der plättchenförmigen Kristallfassung erstreckt und das dort verbleibende Material der Kristallfassung ein Gelenk in der Art eines (Film-)Scharniers bildet, wobei die beiden durch die schlitzförmige Öffnung voneinander getrennten Kristallfassungs-Hälften gegeneinander schwenkbare Schenkel bilden. Diese Schenkel klemmen den Laserkristall zwischen ihnen fest. Um dabei, wenn die Schenkel beim Einschieben des Laserkristalls aufgespreizt werden sollen, ein unerwünschtes Aufreißen des Steges zwischen den Schenkeln möglichst hintanzuhalten, ist es auch von Vorteil, wenn die Einschnitt-artige schlitzförmige Öffnung in einer verbreiterten Rundung endet.

Zum Aufbringen der Klemmkraft könnte an sich von außen her eine Druckkraft auf die beiden Schenkel ausgeübt werden, etwa durch eine Art Zwinge oder dergl. Einrichtung. Eine besonders einfache Form der Klemmkraftaufbringung ist jedoch möglich, wenn die Schenkel in einer Richtung quer zur schlitzförmigen Öffnung verlaufende Querbohrungen zum Aufnehmen eines die Schenkel gegeneinander verschwenkenden Spannelements besitzen. Hierbei ist in besonders vorteilhafter Weiterbildung vorgesehen, daß die Querbohrung im einen Schenkel eine glatte Durchbohrung mit Übermaß ist und die Querbohrung im anderen Schenkel mit einem Innengewinde versehen ist, und daß das Spannelement eine sich mit ihrem Schaft durch die glatte Durchbohrung des einen Schenkels frei hindurcherstreckende und in die Gewinde-Bohrung des anderen Schenkels eingeschraubte Spannschraube ist. Bei dieser Ausführungsform ist somit einfach eine Spann- oder Klemmschraube vorgesehen, durch deren Verdrehen die beiden Schenkel zusammengespannt oder auseinandergespreizt werden können, um den Laserkristall zwischen ihnen festzuklemmen oder aber freizugeben.

Um den in der Kristallfassung gehaltenen Laserkristall für eine Reinigung besser zugänglich zu machen, hat es sich auch als günstig erwiesen, wenn die Öffnung der Kristallfassung an der vom Kühlkörper abgewandten Seite einen abgeschrägten Rand aufweist, wobei der Laserkristall bis zur Abschrägung reicht.

Wie bereits erwähnt ist die erfindungsgemäße Ausbildung insbesondere in Kombination mit vergleichsweise kleinen Laserkristallen zu verwenden, und es ist demgemäß von besonderem Vorteil, wenn der Laserkristall die Form eines Parallelepipeds mit Dickenabmessungen in der Größenordnung von ca. 1 mm und mit einer Länge von ca. 2 mm hat, wobei der Durchmesser des gepumpten Volumens in der Größenordnung von 10 µm liegt.

Die Erfindung wird nachstehend anhand von in der Zeichnung veranschaulichten Ausführungsbeispielen, auf die sie jedoch nicht eingeschränkt sein soll, noch weiter erläutert. Es zeigen im einzelnen:
Fig.1 ein Schema einer Kurzpuls-Laservorrichtung;
Fig.2 eine Draufsicht auf einen Kühlkörper samt Kühlfassung für den Laserkristall einer solchen Laservorrichtung, gemäß Pfeil II in Fig.3;
Fig.3 einen Querschnitt durch den Kühlkörper und die Kristallfassung samt Laserkristall, gemäß der Linie III-III in Fig.2;
Fig.4 eine Draufsicht auf den Kühlkörper ohne Kristallfassung;
Fig.5 eine teilweise aufgebrochene Draufsicht auf die plättchenförmige Kristallfassung;
Fig.6 eine Seitenansicht der Kristallfassung, gemäß Pfeil VI in Fig.5;
Fig.7 schematisch eine Draufsicht auf den Laserkristall im in der nur teilweise dargestellten Kristallfassung eingeklemmten Zustand, zur Veranschaulichung der kurzen Wege bei der Wärmeableitung;
Fig.8 zu Vergleichszwecken, in ungefähr vergleichbarem Maßstab, die Anordnung eines Laserkristalls in einem Kühlkörper gemäß früheren Laservorrichtungen; und
Fig.9 in gegenüber Fig.2 noch weiter vergrößertem Maßstab eine Detaildarstellung des Bereiches der Öffnung in der Kristallfassung, zur Veranschaulichung von Indiumfolien-Zwischenlagen.

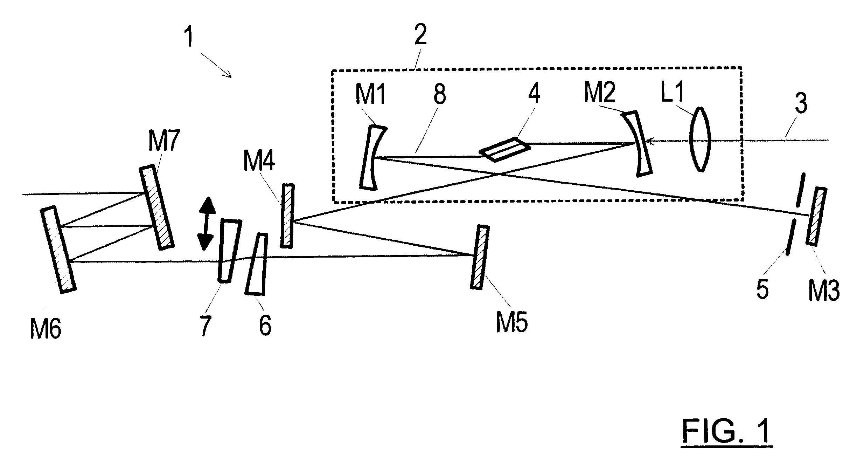

In Fig.1 ist schematisch eine Kurzpuls-Laservorrichtung 1 veranschaulicht, in der für die Kurzpulserzeugung das erwähnte "Kerr-lens mode-locking"-Prinzip und für die Dispersionskontrolle die erwähnten in Dünnschichttechnik realisierten Laserspiegel verwendet werden, wobei bei einer derartigen Laservorrichtung die Erfindung mit besonderem Vorteil angewendet werden kann.

Die Laservorrichtung 1 weist gemäß Fig.1 einen mit gestrichelter Linie angedeuteten Laserkopf 2 auf, dem ein Pumpstrahl 3, z.B. ein Argonlaserstrahl, zugeführt wird. Der Pumplaser (z.B. Argonlaser) selbst ist der Einfachheit halber weggelassen und gehört dem Stand der Technik an.

Nach Durchlaufen einer Linse L1 und eines halbdurchlässigen Laserspiegels M2 durchläuft der Laserstrahl einen Laserkristall 4, im vorliegenden Beispiel einen Titan:Saphir-(Ti:S-)Festkörperlaserkristall, wonach er auf einen Laserspiegel M1 auftrifft und von diesem zu einem Laserspiegel M3 außerhalb des Laserkopfs 2, unter Durchqueren einer Blende 5 mit vertikalem Schlitz, reflektiert wird. Dieser Laserspiegel M3 reflektiert den Laserstrahl wieder zum Spiegel M1 zurück, von wo der Laserstrahl zum Laserspiegel M2 zurückreflektiert wird, wobei er den Laserkristall 4 ein zweites Mal durchläuft. Von dort wird der Laserstrahl dann über weitere Laserspiegel M4, M5, und einen halbdurchlässigen, keilförmigen Auskoppelspiegel 6 reflektiert, wodurch der Laserresonator gebildet ist. Über den Auskoppelspiegel 6 wird der Laserstrahl ferner ausgekoppelt, wobei ein Kompensationsplättchen 7 sowie Spiegel M6, M7 in Dünnschicht-technik für eine Dispersionskompensation sowie dafür sorgen, daß keine unerwünschten Reflexionen in Richtung Laserresonator auftreten. Der auf die beschriebene Weise im Laserkopf 2 erhaltene Resonatorstrahl ist mit 8 bezeichnet.

Der Laserkristall 4 ist ein planparalleler Körper (ein Parallelepiped), welcher optisch nicht-linear ist und ein Kerr-Element bildet, welches für höhere Feldstärken des Laserstrahls eine größere wirksamere optische Dicke besitzt, hingegen eine geringere wirksame Dicke aufweist, wo die Feldstärke bzw. Intensität des Laserstrahls geringer ist. Dieser an sich bekannte Kerreffekt wird zur Selbstfokussierung des Laserstrahls ausgenutzt, d.h. der Laserkristall 4 bildet für den Laserstrahl (Resonatorstrahl 8) eine Fokussierungslinse.

Zur Modenverkopplung wird weiters im gezeigten Ausführungsbeispiel die Blende 5 verwendet, die den Resonatorstrahl 8 an einer Stelle einschneidet, wo er dann, wenn die Intensität bzw. Feldstärke des fluktuierenden Laserstrahls geringer ist, einen größeren Durchmesser aufweist, hingegen dann, wenn die Intensität des Laserstrahl zufolge der Fluktuation größer ist, d.h. wenn der Resonatorstrahl im Laserkristall fokussiert wird, einen kleineren Durchmesser besitzt.

Die Spiegel M1 bis M7 sind in Dünnschicht-Technik ausgeführt, d.h. sie sind je aus vielen Schichten aufgebaut, die bei der Reflexion des eine große Bandbreite aufweisenden ultrakurzen Laserpulses ihre Funktion ausüben. Die verschiedenen Wellenlängenkomponenten des Laserstrahls dringen unterschiedlich tief in die Schichten des jeweiligen Spiegels ein, bevor sie reflektiert werden. Dadurch werden die verschiedenen Wellenlängenkomponenten verschieden lang am jeweiligen Spiegel verzögert; die kurzwelligen Komponenten werden weiter außen reflektiert, die langwelligen Anteile hingegen tiefer im Spiegel. Dadurch werden die langwelligen Komponenten gegenüber den kurzwelligen Komponenten zeitlich verzögert. Auf diese Weise wird eine Dispersionskompensation insofern erhalten, als im Zeitbereich besonders kurze Pulse (vorzugsweise im Bereich von 10 Femtosekunden und darunter) ein breites Frequenzspektrum besitzen; dies führt dazu, daß die verschiedenen Frequenzkomponenten des Laserstrahls im Laserkristall 4, der wie erwähnt optisch nicht-linear ist, einen unterschiedlichen Brechungsindex "sehen", d.h. die optische Dicke des Laserkristalls 4 ist für die verschiedenen Frequenzkomponenten verschieden groß, und die verschiedenen Frequenzkomponenten werden daher beim Durchlaufen des Laserkristalls 4 verschieden verzögert. Diesem Effekt wird durch die genannte Dispersionskompensation an den Dünnschicht-Laserspiegeln M1 bis M7 begegnet.

Dabei ist es auch im Hinblick auf die geringen Verzögerungen pro Reflexion an einem Spiegel M1 bis M7 zweckmäßig bzw. erforderlich, einen vergleichsweise dünnen Laserkristall 4 zu verwenden, der andererseits zur Erzielung der gewünschten Wirkung eine hohe Dotierung aufweisen soll, wobei weiters der Pumpstrahl 3 und der Resonatorstrahl 8 möglichst stark zu fokussieren sind. Dies führt aber zu einer hohen Wärmebelastung des Laserkristalls 4.

Üblicherweise ist der Laserkristall an einem metallischen Kühlkörper montiert, welcher auf eine Temperatur von ca. 10°C gekühlt wird. Eine Kühlung auf eine tiefere Temperatur ist jedoch wegen des Risikos einer dabei auftretenden Kondensation nicht möglich. Dies bedeutet aber wiederum, daß die Temperatur des Laserkristalls und insbesondere des gepumpten Volumens des Laserkristalls relativ hoch wird, ohne daß für eine entsprechende Abkühlung von Seiten des Kühlkörpers her gesorgt werden kann. Dies ist gerade im Fall der vorliegenden Laservorrichtung 1 deshalb problematisch, da wie erwähnt ein Laserkristall 4 mit kleinen Abmessungen und mit hoher Dotierung zu verwenden wäre, wobei zufolge der starken Fokussierung des Pumpstrahls 3 bzw. Resonatorstrahls 8 der Laserkristall 4 besonders hoch erhitzt wird.

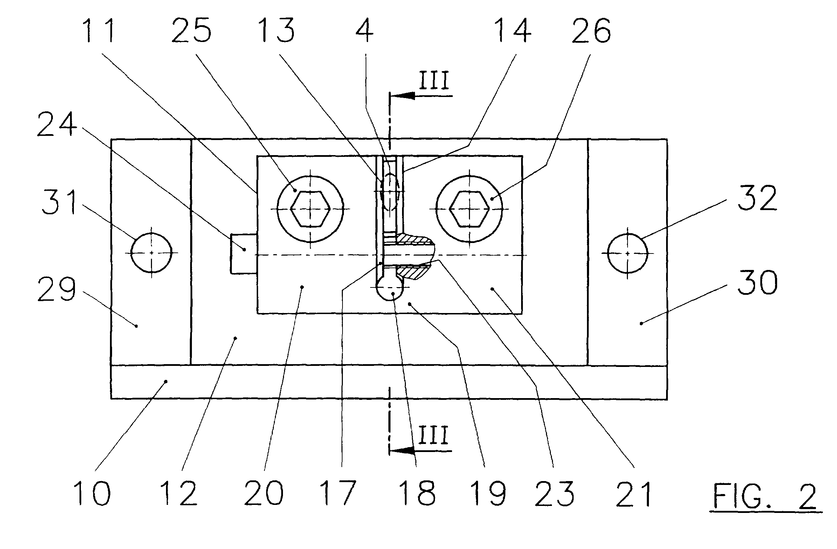

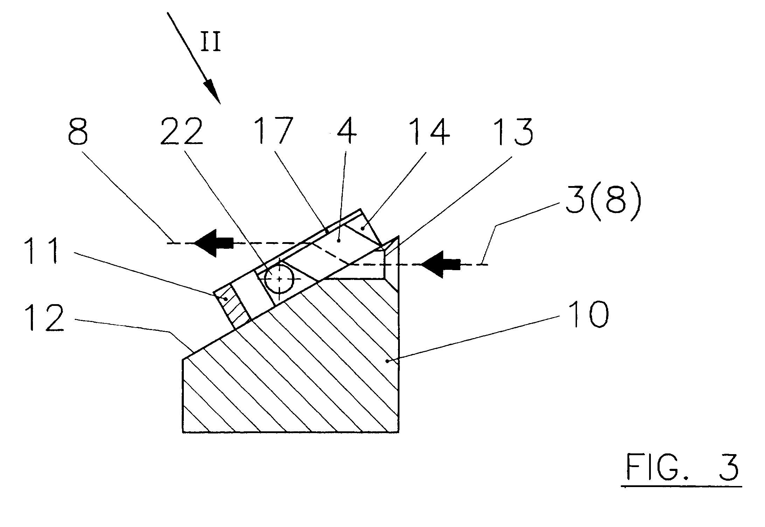

Aus Fig.2 und 3 ist nun eine zumindest derzeit besonders bevorzugte, als besonders vorteilhaft angesehene Anordnung mit einem Kühlkörper 10 und einer darauf angebrachten Kristallfassung 11 für den Laserkristall 4 (Fig.3) veranschaulicht. Der Kühlkörper 10, der beispielsweise aus Aluminium (schwarz eloxiert) bestehen kann, ist an sich herkömmlich und weist eine schräge obere Fläche 12 auf, an der eine Bohrung 13 für den Resonatorstrahl 8 bzw. Pumpstrahl 3 mündet.

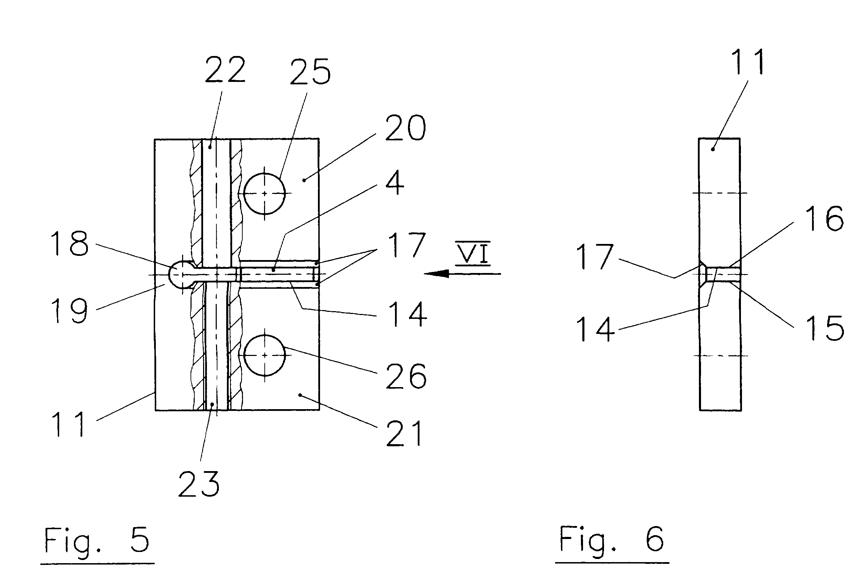

Die Kristallfassung 11, die an sich auch einteilig mit dem Kühlkörper 10 ausgebildet sein könnte, ist bevorzugt ein gesonderter Bauteil und insbesondere, wie auch aus Fig.5 und 6 ersichtlich ist, in Form eines Plättchens aus gut wärmeleitendem Metall, insbesondere Cu, ausgebildet, der an der schrägen oberen Fläche 12 des Kühlkörpers 10 plan aufliegend angebracht ist. Dabei ist die Kristallfassung 11 mit einer schlitzförmigen Öffnung 14 zur Laserstrahl-Bohrung 13 ausgerichtet. In dieser schlitzförmigen, Einschnitt-artigen Öffnung 14 ist der Laserkristall 4 festgeklemmt, wobei er seitlich an den Wänden 15, 16 (s. Fig.6) der plättchenförmigen Kristallfassung 11 flächig anliegt. Der obere Rand der Öffnung 14 ist angefast oder abgeschrägt, wie in Fig.5 und 6 bei 17 veranschaulicht ist. Dabei reicht die Abschrägung oder Fase 17 bis zur Oberseite des Laserkristalls 4 (Fig.2 und 3) in der Öffnung 14, wodurch dieser im Bedarfsfall leichter gereinigt werden kann.

Die Öffnung 14 endet innen im Kristallfassungs-Plättchen 11 in einer verbreiterten Rundung 18 unter Belassung eines z.B. ungefähr 1 mm dicken Steges 19, der die so erhaltenen Hälften oder Schenkel 20, 21 des Kristallfassungs-Plättchens 11 miteinander in der Art eines "Filmscharniers" verbindet. Der Steg 19 ist dabei in gewissem Ausmaß verformbar, so daß die Schenkel 20, 21 relativ zueinander um das so durch den Steg 19 gebildete Gelenk etwas verschwenkt, d.h. zusammengespannt oder auseinandergespreizt, werden können. Das Metall der Kristallfassung 11, vorzugsweise Kupfer, läßt dabei die entsprechende Verformung des Steges 19 zum Verschwenken der Schenkel 20, 21 zu. Auf diese Weise kann durch Zusammenspannen der Schenkel 20, 21 der Laserkristall 4 einfach in der schlitzförmigen Öffnung 14 eingespannt und kraftschlüssig festgehalten werden.

Zu diesem Einspannen bzw. Festklemmen weisen die Schenkel 20, 21 je eine Querbohrung 22, 23 auf, wobei die Querbohrung 22 im einen Schenkel 20 eine etwas größere, glatte Durchbohrung ist, wogegen die Querbohrung 23 im anderen Schenkel 21 eine Gewindebohrung ist. Diese Gewindebohrung 23 kann wie dargestellt eine durchgehende Bohrung sein, sie könnte jedoch auch eine Sackbohrung sein, die nur zur Durchbohrung 22 hin offen ist. Durch die glatte Durchbohrung 22 wird eine als Spannelement dienende Spannschraube 24 (Fig.2) eingesetzt und in die Gewindebohrung 23 eingeschraubt, um so das Zusammenziehen der Schenkel 20, 21 zu bewerkstelligen.

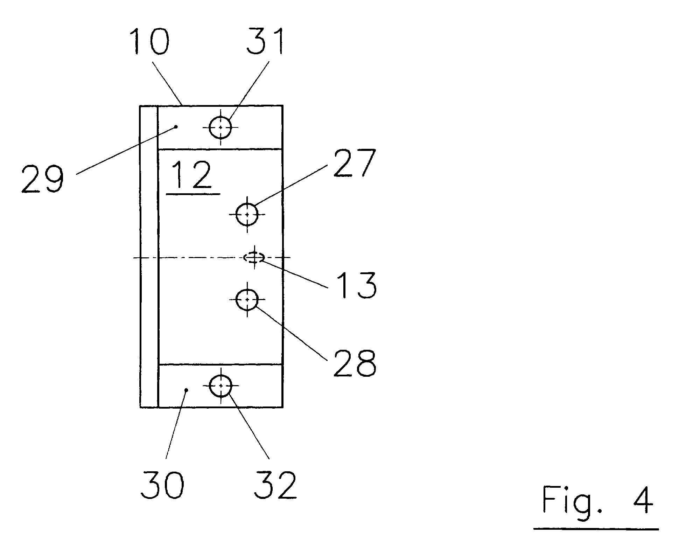

Aus Fig.2 und 5 sind weiters Bohrungen bzw. Schrauben 25, 26 zum Befestigen der Kristallfassung 11 am Kühlkörper 10 ersichtlich, der entsprechende Gewindebohrungen 27, 28 (Fig.4) aufweist. Der Kühlkörper 10 kann weiters über seitliche Flanschen 29, 30, die mit Schraubenbohrungen 31, 32 versehen sind, an einem nicht näher dargestellten Halter oder dergl. mit Kühlmittelversorgung, wie an sich üblich, angebracht werden.

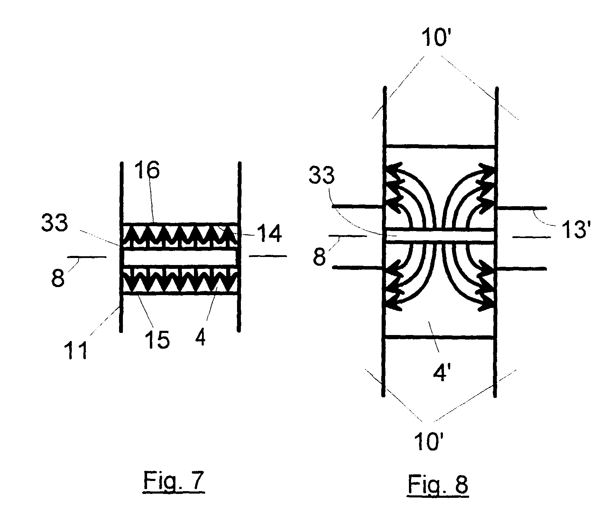

In Fig.7 ist schematisch die Wärmeableitung bei der vorliegenden Laservorrichtung gezeigt, wobei ersichtlich ist, daß im Laserkristall 4 außerordentlich kurze, durch Pfeile angegebene Wege für die Wärmeabfuhr vom gepumpten Volumen 33 im Inneren des Laserkristalls 4 bis zu den Seitenflächen des Laserkristalls 4 und damit den Seitenwänden 15, 16 der Bohrung 14 in der Kristallfassung 11 gegeben sind. Damit ergibt sich ein außerordentlich geringer Wärmewiderstand zwischen dem gepumpten Volumen 33 und den gekühlten Wänden 15, 16 bzw. Seitenflächen des Laserkristalls 4. Dadurch kann auch der Laserkristall 4 in seinem Inneren, im Bereich des gepumpten Volumens 33, problemlos auf einer ausreichend niedrigen Temperatur gehalten werden. Die kurzen Wege (s. Pfeile in Fig.7) für die Wärmeabfuhr im Laserkristall 4 sind von besonderer Bedeutung, da die Wärmeleitfähigkeit des Materials des Laserkristalls 4 vergleichsweise gering ist (die Wärmeleitfähigkeit von Saphir (Wirtskristall für mit Titanium dotierten Titan-Saphir) beträgt bei 500 K:k (500 K) = 25 W/(mK), und bei 300 K:k (300 K) = 46 W/(mK)).

In Fig.8 ist zu Vergleichszwecken eine herkömmliche Anordnung eines Laserkristalls 4' mit vergleichbarer Dicke, jedoch größerer Breite, in einem Kühlkörper 10' mit einer Bohrung 13' für den Laserstrahl angebracht. Mit gebogenen Pfeilen sind wiederum die Wege für die Wärmeableitung aus dem gepumpten Volumen 33 zu dem am Laserkristall 4' anliegenden entsprechenden Kühlflächen des Kühlkörpers 10' veranschaulicht. Es ist ersichtlich, daß bei einer derartigen Anordnung der gesamte Wärmewiderstand größer ist, da der Weg zwischen dem gepumpten Volumen 33 und den gekühlten Flächen größer ist. Dadurch ist jedoch die Ausgangsleistung des Lasers niedriger, und auch die Lebensdauer des Lasers ist infolge der höheren Temperaturen im Inneren des Laserkristalls 4', im Bereich des gepumpten Volumens 33, bei der bekannten Anordnung niedriger als bei der Anordnung gemäß Fig.2 bis 7.

Die Flächen der Kristallfassung 11, die in Kontakt mit dem Laserkristall 4 stehen, sind vorzugsweise im Hinblick auf einen guten Wärmeübergang poliert. Weiters können an den Kontaktstellen, wo Wärmeübergänge stattfinden, wie insbesondere zwischen Kühlkörper 10 und Kristallfassung 11, gut wärmeleitende Pasten, wie an sich bekannt, verwendet werden. Anstatt solcher Wärmeleitpasten können auch Indiumfolien zur Erzielung eines guten Wärmeüberganges verwendet werden. Diese Indiumfolien sind weich und schmiegen sich so eng an die Kontaktflächen an, wobei eine große Wärmeübergangsfläche und ein guter Wärmeübergang erreicht werden.

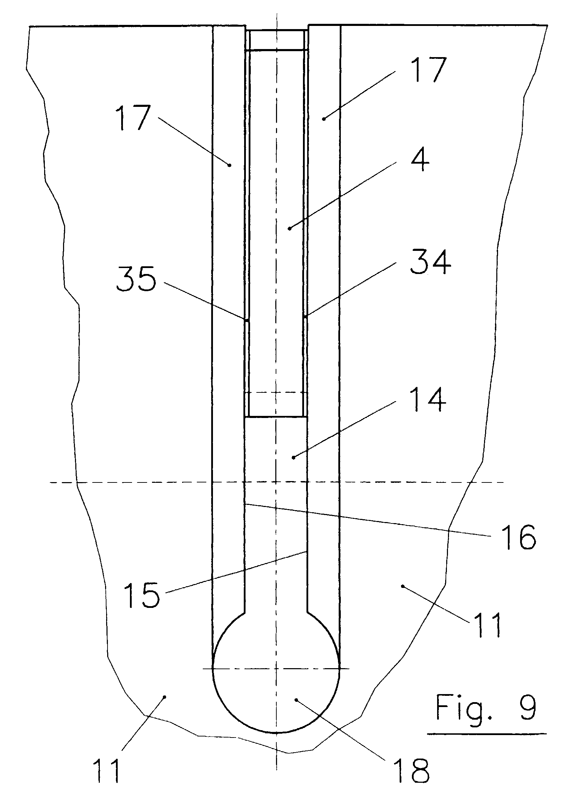

Besonders bevorzugt wird eine derartige Indiumfolien-Zwischenlage im Bereich des Laserkristalls 4 und der Wände 15, 16 der den Laserkristall 4 aufnehmenden Öffnung 14, wie auch aus Fig.9 ersichtlich ist. Dabei sind auf beiden Seiten des Laserkristalls 4 zwischen diesem und den gekühlten Wänden 15, 16 der Öffnung 14 der Kristallfassung 11 Indiumfolien 34, 35 angebracht. Es handelt sich hierbei um ein weiches Metall, das Unebenheiten der Kristallflächen bzw. der Wände 15, 16 ausgleicht und so eine Verbesserung der Wärmeleitung erzielen läßt.

## Patentansprüche

1. Kurzpuls-Laservorrichtung (1) mit passiver Modenverkopplung, mit einem Laserresonator, dem ein Pumpstrahl (3) zugeführt wird, mit einem Laserkristall (4), z.B. einem Titan-Saphir-(Ti:S-)Laserkristall, und mit Laserspiegeln (M1 bis M7), wobei der Laserkristall (4), der zufolge der Strahlfokussierung einer Wärmebelastung ausgesetzt ist, an einem der Wärmeableitung dienenden Kühlkörper (10) montiert ist, der eine Bohrung (13) für den Durchgang des Laserstrahls (3; 8) aufweist, dadurch gekennzeichnet, daß am Kühlkörper (10) eine Kristallfassung (11) aus wärmeleitendem Material vorgesehen und der Laserkristall (4) in einer Öffnung (14) dieser Kristallfassung (11), unter seitlicher Anlage an gegenüberliegenden Wänden (15, 16) der Öffnung (14) der Kristallfassung (11), gehalten ist, wobei die Öffnung (14) in der Kristallfassung (11) mit der Bohrung (13) im Kühlkörper (10) fluchtet.

2. Kurzpuls-Laservorrichtung nach Anspruch 1, dadurch gekennzeichnet, daß die beispielsweise plättchenförmige Kristallfassung (11) mit einer schlitzförmigen Öffnung (14) ausgebildet ist.

3. Kurzpuls-Laservorrichtung nach Anspruch 2, dadurch gekennzeichnet, daß sich die schlitzförmige Öffnung (14) von einem Rand der Kristallfassung (11) her in diese erstreckt.

4. Kurzpuls-Laservorrichtung nach Anspruch 3, dadurch gekennzeichnet, daß sich die schlitzförmige Öffnung (14) bis knapp vor dem gegenüberliegenden Rand der plättchenförmigen Kristallfassung (11) erstreckt und das dort verbleibende Material des Plättchens ein Gelenk (19) in der Art eines Scharniers bildet, wobei die beiden durch die schlitzförmige Öffnung (14) voneinander getrennten Kristallfassungs-Hälften gegeneinander schwenkbare Schenkel (20, 21) bilden.

5. Kurzpuls-Laservorrichtung nach Anspruch 4, dadurch gekennzeichnet, daß die schlitzförmige Öffnung (14) durch einen in einer verbreiterten Rundung (18) endenden Einschnitt gebildet ist.

6. Kurzpuls-Laservorrichtung nach Anspruch 4 oder 5, dadurch gekennzeichnet, daß die Schenkel (20, 21) in einer Richtung quer zur schlitzförmigen Öffnung (14) verlaufende Querbohrungen (22, 23) zum Aufnehmen eines die Schenkel (20, 21) gegeneinander verschwenkenden Spannelements (24) besitzen.

7. Kurzpuls-Laservorrichtung nach Anspruch 6, dadurch gekennzeichnet, daß die Querbohrung (22) im einen Schenkel (20) eine glatte Durchbohrung mit Übermaß ist und die Querbohrung (23) im anderen Schenkel (21) mit einem Innengewinde versehen ist, und daß das Spannelement eine sich mit ihrem Schaft durch die glatte Durchbohrung (22) des einen Schenkels (20) frei hindurcherstreckende und in die Gewinde-Bohrung (23) des anderen Schenkels (21) eingeschraubte Spannschraube (24) ist.

8. Kurzpuls-Laservorrichtung nach einem der Ansprüche 1 bis 7, dadurch gekennzeichnet, daß die Öffnung (14) der Kristallfassung (11) an der vom Kühlkörper (10) abgewandten Seite einen abgeschrägten Rand (17) aufweist, wobei der Laserkristall (4) bis zur Abschrägung (17) reicht.

9. Kurzpuls-Laservorrichtung nach einem der Ansprüche 1 bis 8, dadurch gekennzeichnet, daß der Laserkristall (4) die Form eines Parallelepipeds mit Dickenabmessungen in der Größenordnung von ca. 1 mm und mit einer Länge von ca. 2 mm hat, wobei der Durchmesser des gepumpten Volumens (33) in der Größenordnung von 10 µm liegt.

## Claims

1. A passively mode-locked short pulse laser arrangement (1) comprising a laser resonator to which a pump beam (3) is supplied, a laser crystal (4), e.g. a titanium-sapphire-(Ti:S) laser crystal, and laser mirrors (M1 to M7), the laser crystal (4), which is subjected to a thermal load on account of the beam focussing, being mounted on a cooling body (10) provided for the removal of heat, which cooling body includes a bore (13) for the passage of the laser beam (3; 8), characterised in that a crystal mount (11) of heat conductive material is provided on the cooling body (10) and that the laser crystal (4) is held in an opening (14) of this crystal mount (11), with lateral abutment on oppositely arranged walls (15, 16) of the opening (14) of the crystal mount (11), the opening (14) in the crystal mount (11) being in alignment with the bore (13) in the cooling body (10).

2. A short pulse laser arrangement according to claim 1, characterised in that the, e.g. platelet-shaped, crystal mount (11) has a slit-shaped opening (14).

3. A short pulse laser arrangement according to claim 2, characterised in that the slit-shaped opening (14) extends from a rim of the crystal mount (11) into the same.

4. A short pulse laser arrangement according to claim 3, characterised in that the slit-shaped opening (14) extends as far as to shortly in front of the opposite rim of the platelet-shaped crystal mount (11), and the material of the platelet remaining there forms a joint (19) of the type of a hinge, the two halves of the crystal mount which are separated from each other by the slit-shaped opening (14) forming legs (20, 21) which are pivotable relative to each other.

5. A short pulse laser arrangement according to claim 4, characterised in that the slit-shaped opening (14) is formed by an incision ending in a widened round (18).

6. A short pulse laser arrangement according to claim 4 or 5, characterised in that the legs (20, 21) have transverse bores (22, 23) extending in a direction transverse to the slit-shaped opening (14), for accommodating a bracing element (24) which pivots the legs (20, 21) relative to each other.

7. A short pulse laser arrangement according to claim 6, characterised in that the transverse bore (22) in one leg (20) is an overdimensioned smooth through-bore and the transverse bore (23) in the other leg (21) is provided with an internal thread, and that the bracing element is a tightening screw (24) with its shaft freely extending through the smooth through-bore (22) of the one leg (20) and screwed into the threaded bore (23) of the other leg (21).

8. A short pulse laser arrangement according to any one of claims 1 to 7, characterised in that the opening (14) of the crystal mount (11) has a chamfered rim (17) at its side facing away from the cooling body (10), the laser crystal (4) extending as far as to the chamfer (17).

9. A short pulse laser arrangement according to any one of claims 1 to 8, characterised in that the laser crystal (4) has the form of a parallelepiped having thickness dimensions in the order of approximately 1 mm and a length of approximately 2 mm, the diameter of the pumped volume (33) being in the order of 10 µm.

## Revendications

1. Dispositif laser à impulsion brève (1) comportant un couplage de modes passif, un résonateur laser auquel est envoyé un faisceau de pompage (3), un cristal laser (4), par exemple un cristal laser (Ti : S) Titane-Saphir, et des miroirs lasers (M1 à M7), dans lequel le cristal laser (4) qui est exposé à une charge thermique en raison de la focalisation du faisceau est monté sur un refroidisseur (10) qui sert à la dissipation de la chaleur et qui comporte un trou (13) pour le passage du faisceau laser (3 ; 8), caractérisé en ce qu'une monture de cristal (11) est prévue sur le refroidisseur (10) et en ce que le cristal laser (4) est tenu dans une ouverture (14) de cette monture de cristal (11) avec un appui latéral à des parois opposées (15, 16) de l'ouverture (14) de la monture de cristal (11), l'ouverture (14) dans la monture de cristal (11) étant alignée avec le trou (13) dans le refroidisseur (10).

2. Dispositif laser à impulsion brève selon la revendication 1, caractérisé en ce que la monture de cristal (11), par exemple en forme de plaquette, est conçue avec une ouverture (14) en forme de fente.

3. Dispositif laser à impulsion brève selon la revendication 2, caractérisé en ce que l'ouverture (14) en forme de fente s'étend à partir d'un bord de la monture de cristal (11) dans celle-ci.

4. Dispositif laser à impulsion brève selon la revendication 3, caractérisé en ce que l'ouverture (14) en forme de fente s'étend jusque peu avant le bord opposé de la monture de cristal (11) en forme de plaquette et en ce que le matériau restant là de la plaquette forme une articulation (19) comme une charnière, les deux moitiés de monture de cristal séparées l'une de l'autre par l'ouverture (14) en forme de fente formant des côtés (20, 21) pivotant l'un par rapport à l'autre.

5. Dispositif laser à impulsion brève selon la revendication 4, caractérisé en ce que l'ouverture (14) en forme de fente est formée par une entaille se terminant par un arrondi élargi (18).

6. Dispositif laser à impulsion brève. selon la revendication 4 ou 5, caractérisé en ce que les côtés (20, 21) ont des trous transversaux (22, 23) qui s'étendent dans une direction transversale par rapport à l'ouverture (14) en forme de fente et qui sont destinés à recevoir un élément de serrage (24) faisant pivoter les côtés (20, 21) l'un par rapport à l'autre.

7. Dispositif laser à impulsion brève selon la revendication 6, caractérisé en ce que le trou transversal (22) dans un côté (20) est un trou traversant lisse à surmesure et le trou transversal (23) dans l'autre côté (21) est muni d'un taraudage et en ce que l'élément de serrage est une vis de serrage (24) qui s'étend librement avec sa tige à travers le trou traversant lisse (22) du côté (20) et qui est vissée dans le trou taraudé (23) de l'autre côté (21).

8. Dispositif laser à impulsion brève selon l'une des revendications 1 à 7, caractérisé en ce que l'ouverture (14) de la monture de cristal (11) comporte un bord biseauté (17) sur le côté opposé au refroidisseur (10), le cristal laser (4) atteignant le biseau (17).

9. Dispositif laser à impulsion brève selon l'une des revendications 1 à 8, caractérisé en ce que le cristal laser (4) a la forme d'un parallélépipède avec des dimensions en épaisseur de l'ordre de 1 mm environ et avec une longueur de 2 mm environ, le diamètre du volume pompé (33) étant de l'ordre de 10 µm.
